# EUROPÄISCHE PATENTSCHRIFT

(11) **EP 2 394 800 B1**
(45) Veröffentlichungstag und Bekanntmachung des Hinweises auf die Patenterteilung: **06.03.2013**
(21) Anmeldenummer: 10165608.0
(22) Anmeldetag: 11.06.2010
(51) Int. Cl.: B25J 15/02, B65G 47/90, B65B 35/16

(54) **Vorrichtung zum Greifen und Anheben von Gegenständen**
Device for gripping and lifting objects
Dispositif de saisie et de levage d'objets

(43) Veröffentlichungstag der Anmeldung: 14.12.2011
(73) Patentinhaber: Riedmayer, Sigurd A., 88045 Friedrichshafen (DE)
(72) Erfinder: Riedmayer, Sigurd A., 88045 Friedrichshafen (DE)
(74) Vertreter: Engelhardt, Guido

(56) Entgegenhaltungen:
- WO-A1-2008/084134
- WO-A1-2008/145022
- US-A1- 2009 133 524

## Beschreibung

Die Erfindung bezieht sich auf eine Vorrichtung zum Greifen und Anheben von Gegenständen, bestehend aus mindestens zwei an einem Traggestell abgestützten Greifarmen, zwischen denen der aufzunehmende Gegenstand einspannbar ist, und aus einer mit dem jeweiligen Greifarm über Zwischenglieder trieblich verbundenen Antriebstriebseinrichtung.

Mit Hilfe einer solchen Vorrichtung, die als Greif- und Spannvorrichtung zum lösbaren Greifen und Halten einer Last durch die DE GM 84 30 418 U1 beschrieben ist, sollen Gegenstände transportierbar sein. Die bekannt gewordene Vorrichtung besteht aus zwei im Ausgangszustand parallel und beabstandet zueinander verlaufenden Greifarmen, die über ein Antriebsgestänge mit einer Antriebseinrichtung verbunden sind. Durch die Antriebseinrichtung ist das Antriebsgestänge auseinander gedrückt, so dass die Greifarme um den Angriffspunkt des Antriebsgestänges scherenförmig auf und zu bewegt werden können, um die Last mittels Reibkraft einzuspannen und aufzunehmen.

Solche Vorrichtungen haben sich in einer Vielzahl von Anwendungen in der Praxis zwar bewährt, jedoch weisen diese erhebliche Nachteile auf. Die bekannten Vorrichtungen sind nämlich mittels einer Antriebseinrichtung angetrieben, die eine vorgegebene Krafteinleitung aufweist. Folglich sind die auf die Gegenstände einwirkenden normalen Spannkräfte, die von den Greifarmen aufgewendet sind, konstant und können nicht wesentlich variiert werden. Sollten beispielsweise äußerst empfindliche, leicht zerbrechliche Gegenstände mittels der Greif- und Handhabungsvorrichtung transportiert werden, führt dies oftmals zu Beschädigungen oder sogar zu Zerstörungen der Gegenstände, wenn die Spannkraft einen Wert übersteigt, der größer bemessen ist als die Kraft, die von dem Gegenstand abgestützt werden.

Weisen die Gegenstände eine hohe Eigengewichtskraft auf, reichen die Spannkräfte oftmals nicht aus, diese Gegenstände zuverlässig zwischen den Greifarmen zu halten; eine Krafterhöhung ist aufgrund der verwendeten Antriebseinrichtung und der vorhandenen Geometrie nicht möglich.

Darüber hinaus hat sich als nachteilig herausgestellt, dass bei unterschiedlich groß bemessenen Gegenständen die Greifeinrichtung, insbesondere die Greifarme, auszutauschen sind, denn die Greifarme der bekannt gewordenen Greif- und Handhabungsvorrichtungen können in ihrer Weite lediglich unwesentlich reguliert werden.

Es ist daher Aufgabe der Erfindung eine Vorrichtung zum Greifen und Anheben von Gegenständen der eingangs genannten Gattung derart weiterzubilden, dass die von der Antriebseinrichtung aufgewendete Kraft in einem einstellbaren Übersetzungsverhältnis an die Greifarme gelangt und dass die Greifarme möglichst schnell geschlossen oder geöffnet werden können. Des Weiteren soll die Weitenregulierung, also der Abstand zwischen den Greifarmen, möglichst ohne zeitliche Verzögerung und ohne Austausch der Greifarme durchführbar sein.

Diese Aufgabe ist dadurch gelöst, dass das jeweilige Zwischenglied als L-förmiger Führungsschlitten ausgestaltet ist, dass das erste freie Ende des Führungsschlittens mittels eines Kniehebels trieblich mit der Antriebseinrichtung verbunden ist, dass das zweite freie Ende des Führungsschlittens mit dem jeweiligen Greifarm, gegenüberliegend dem Angriffspunkt des Kniehebels an dem Führungsschlitten unmittelbar oder über Zwischenglieder in kraftschlüssiger Wirkverbindung steht, und dass der Führungsschlitten und der jeweilige Greifarm an einem Führungsgestänge linear verschiebbar gehalten sind.

Dadurch, dass zur Weiteneinstellung der Greifarme dem Führungsschlitten jeweils eine Gewindespindel zugeordnet ist, die zueinander gegenläufige Gewinderichtungen aufweisen, dass der jeweilige Führungsschlitten mit der jeweiligen Gewindespindel kraftschlüssig verbunden ist, und dass an dem Außengewinde der Gewindespindel ein Backen aufgeschraubt ist, der mit dem jeweiligen Greifarm verbunden ist und der drehfest und axial verschiebbar an dem Führungsgestänge gehalten ist, ist erreicht, dass der Abstand zwischen den Greifarmen über die Rotation der jeweiligen Gewindespindel ohne zeitliche Verzögerung und ohne Austausch der Greifarme variabel einstellbar ist.

Da zwischen dem Führungsschlitten und der Antriebseinrichtung ein Kniehebel angeordnet ist, ist die von der Antriebseinrichtung aufgebrachte konstante Kraft in einem vorgegebenen Kraftübersetzungsverhältnis auf den Führungsschlitten und damit auf die Greifarme variabel übertragbar.

Der Kniehebel wird mittels der Antriebseinheit mit einer konstanten Kraft beaufschlagt, so dass der Gelenkpunkt des Kniehebels, der mit der Antriebseinheit verbunden ist, einen Hubweg zurücklegt und dabei die Stangen des Kniehebels aufspreizt, durch die eine Spannkraft auf die Greifarme übertragen ist. Der Kniehebel weist dabei eine Kraftübersetzung auf, die ausgehend von dem Ausgangspunkt des Kniehebels, also im nahezu geschlossenen Zustand bis zu einer fast 180° aufgespreizten Position einen linear ansteigenden Kraftverlauf besitzt. Dieser lineare Kraftverlauf wird von den Greifarmen auf den Gegenstand übertragen.

Wenn beispielsweise eine äußerst schwere Last zu greifen ist, dann sind die Greifarme unmittelbar an die Größenverhältnisse des aufzunehmenden Gegenstandes ausgerichtet und der Kniehebel ist beispielsweise in einer aufgespreizten Winkelstellung von 165° positioniert. Der zurückzulegende Hubweg des Kniehebels ist dann relativ gering, so dass eine maximale Spannkraft von dem Kniehebel auf den Gegenstand ausgeübt ist.

Wenn dagegen der aufzunehmende Gegenstand zerbrechlich oder elastisch ist, dann kann die Kniehebelkraft derart verändert sein, dass diese von der Ausgangsstellung, also von einem Spreizwinkel von etwa 10° ausgeht und der Hubweg begrenzt ist. Die Begrenzung des Hubweges kann beispielsweise mittels eines Gewindestiftes erfolgen und variabel eingestellt werden.

Dies führt dazu, dass die von den Greifarmen aufgewendete Spannkraft, die auf den aufzunehmenden Gegenstand einwirkt, exakt an die Gegebenheiten des Gegenstandes angepasst werden kann. Wenn demnach der Gegenstand äußerst leicht und zerbrechlich ist, wird die Kraft der Antriebseinrichtung durch den Stellungswinkel des Kniehebel derart reduziert, dass die auf den Gegenstand einwirkende Spannkraft diesen nicht zerstört und gleichwohl zuverlässig fixiert. Eine Veränderung der Hebelverhältnisse des Kniehebels kann insbesondere dadurch erreicht sein, dass die Kraftangriffspunkte zwischen der Antriebseinrichtung der jeweiligen Greifarme an dem Führungsschlitten verschiebbar sind, so dass diese variabel bezogen auf das gewünschte Kraftübertragungsverhältnis einstellbar sind.

Ein weiterer Vorteil des Kniehebels ist darin zu sehen, dass der Kniehebel auch die Geschwindigkeiten der Greifarme beeinflusst, und zwar derart, dass die Greifarme bei einer weit aufgespreizten Stellung eine höhere Bewegungsgeschwindigkeit besitzen, als wenn die Stellung des Kniehebels nahezu geschlossen ist. Dies bedeutet, dass beispielsweise bei Greifarmen, die den Gegenstand kraftschlüssig, beispielsweise in Form eines gebogenen Greifarmes einspannen und im nahezu geöffneten Zustand des Kniehebels äußerst rasch geöffnet werden können, in dem der Kniehebel in die nahezu geschlossene Stellung überführt ist, die Greifarme schnell bewegen, die demnach seitlich sehr schnell von dem Gegenstand weggeführt sind, so dass dieser, ohne zu verkanten oder an den Greifarmen hängen zu bleiben, aus diesen gelöst ist. Der Kniehebel besitzt folglich eine äußerst günstige Kinematik, die ein schnelles Öffnen und Schließen der Greiferarme ermöglicht.

Durch die Kniehebel Kinematik und die zusätzlich vorhandene Weiteneinstellung der Greiferarme mittels der Gewindespindeln, kann die auf die Gegenstände einwirkende Spannkraft exakt eingestellt werden, so dass die Gegenstände, auch wenn diese elastisch verformbar sind, definiert eingespannt werden können bzw. wenn die Gegenstände eine sehr hohe Eigengewichtskraft aufweisen, eine zuverlässige und ausreichende Spannkraft auf die Gegenstände einwirkt.

In der Zeichnung sind zwei erfindungsgemäße Ausführungsbeispiele einer Vorrichtung zum Greifen und Anheben von Gegenständen dargestellt, die nachfolgend näher erläutert sind. Im Einzelnen zeigt:
- Figur 1a: ein erstes Ausführungsbeispiel einer Vorrichtung zum Greifen und Anheben von Gegenständen mit zwei an einem Traggestell abgestützten, zueinander beabstandeten die Gegenstände aufnehmenden Greifarme und mit einer Antriebseinrichtung, durch die über ein Kniehebel jeweils ein Führungsschlitten, der trieblich mit den jeweiligen Greifarmen verbunden ist, linear verschiebbar ist, im Schnitt und im Ausgangszustand,
- Figur 1b: die Vorrichtung gemäß Figur 1 a im Betriebszustand,
- Figur 2a: die Vorrichtung gemäß Figur 1a, teilweise geschnitten,
- Figur 2b: die Vorrichtung gemäß Figur 1b, teilweise geschnitten,
- Figur 3a: ein zweites Ausführungsbeispiel einer Vorrichtung zum Greifen und Anheben von Gegenständen mit zwei an einem Traggestell abgestützten, zueinander beabstandeten die Gegenstände aufnehmenden Greifarme und mit einer Antriebseinrichtung, durch die über ein Kniehebel jeweils ein Führungsschlitten, der trieblich mit den jeweiligen Greifarmen verbunden ist, linear verschiebbar ist sowie mit einer Gewindespindel zur Weitenregulierung des Abstandes der Greifarme, im Ausgangszustand,
- Figur 3b: die Vorrichtung gemäß Figur 3a, teilweise geschnitten und
- Figur 4: die Vorrichtung gemäß Figur 3a, in perspektivischer Ansicht.

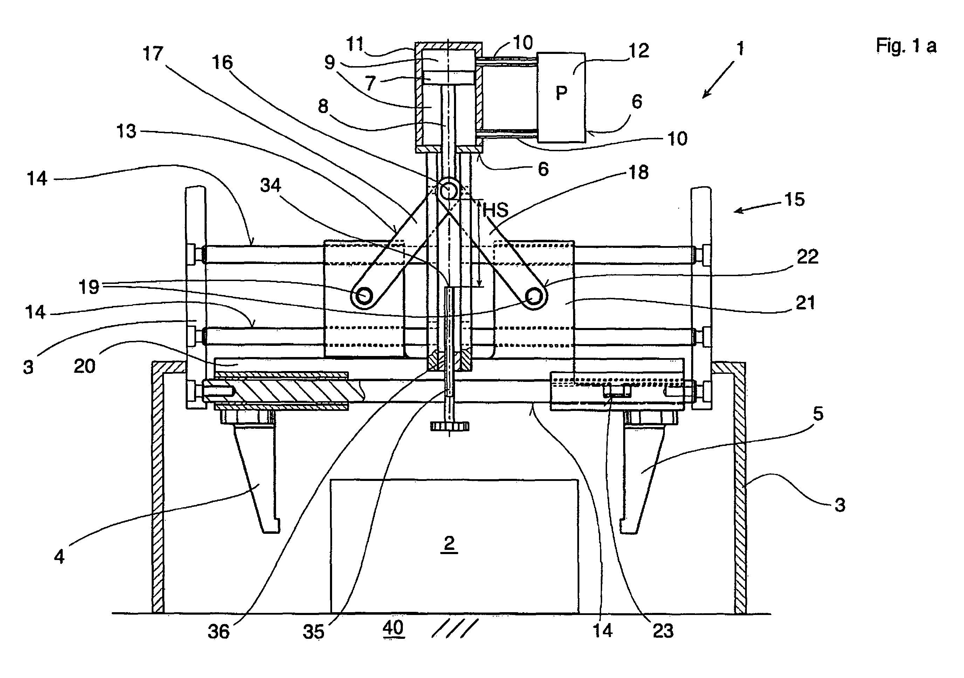

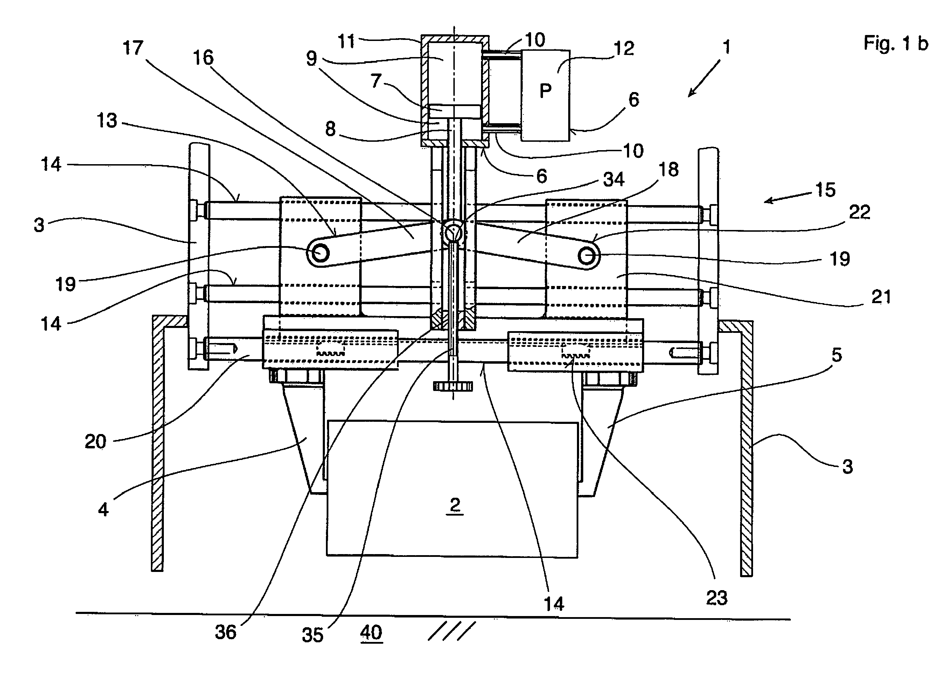

In Figur 1 ist eine Vorrichtung 1 zum Greifen und Anheben von Gegenständen 2 gezeigt, die über ein Traggestell 3 an einem Boden 40 abgestützt ist. Die Gegenstände 2 sind von dem Boden 40 anzuheben und an eine andere Position zu transportieren.

Dies soll mittels der Vorrichtung 1 bewerkstelligt sein. Die Größe und Eigengewichtskraft der Gegenstände 2 können erheblich variieren.

Es ist auch denkbar das Traggestell 3 der Vorrichtung 1 an einem Maschinenrahmen, an einem dreidimensional verfahrbaren Roboter, an einer Decke oder dgl. zu befestigen.

An dem Traggestell 3 sind zwei zueinander beabstandete Greifarme 4, 5 vorgesehen, zwischen denen der aufzunehmende Gegenstand 2 mittels einer Spannkraft im Betriebszustand gehalten ist. Die Greifarme 4, 5 sind dabei an einem Führungsgestänge 14 linear verschiebbar gehalten.

Die Bewegungen der beiden Greifarme 4, 5aufeinander zu zur Einspannung und Aufnahme des Gegenstandes 2 bzw. vice versa, erfolgt mittels einer Antriebseinrichtung 6, durch die über Zwischenglieder 13 die Greifarme 4 und 5 ― wie nachfolgend näher erläutert ― linear bewegbar sind.

Eine mögliche Alternative der Antriebseinrichtung 6 umfasst eine Pumpe P, durch die Hydraulikflüssigkeit über Zuleitungen 10 in zwei Druckräume 9 wechselweise gepresst sind. Die Druckräume 9 sind von einem Gehäuse 11 umgeben und von einem Kolben 7 voneinander getrennt; die beiden Leitungen 10 münden in die Druckräume 9. Die Hydraulikflüssigkeit bewegt den Kolben 7 in Abhängigkeit von der jeweiligen Befüllung des Druckraumes 9. Bereits die vom Kolben 7 eingenommene Druckfläche reduziert oder erhöht die von der Pumpe P zur Verfügung gestellte Kraft.

Weitere Alternativen sind pneumatische, elektrische oder benzinbetriebene Antriebseinrichtungen.

An dem Kolben 7 ist eine Kolbenstange 8 angebracht, die aus dem Gehäuse 11 ragt. Ist somit der obere Druckraum 9 im gezeigten Ausgangszustand der Figur 1 a mit Hydraulikflüssigkeit durch die Pumpe P befüllt, bewegt sich der Kolben 7 nach unten, so dass die Kolbenstange 8, die an einem Angriffspunkt 16 an einem Kniehebel 15 verbunden ist, nach unten geschoben ist. Der Angriffspunkt 16 ist in dem Traggestell 3 in einer Linearführung axial verschiebbar gehalten, so dass dieser durch die Kolbenstange 8 in Richtung auf die Greifarme 4, 5 zugestellt ist.

Ausgehend von dem nahezu geschlossenen Zustand des Kniehebels 15 entsteht beim Aufspreizen des Kniehebels 15 eine linear ansteigende Spannkraft, die auf die Greifarme 4, 5 übertragen ist. Mittels eines in der Figur 1a abgebildeten Anschlages 34 kann der Hubweg des Kniehebels 15, insbesondere des Angriffspunktes 16 begrenzt sein. Der Anschlag 34 ist mittels eines Gewindestiftes 35 erreicht, der in eine Gewindebohrung 36, die in dem Traggestell 3 eingearbeitet ist, variabel eindrehbar ist.

Da die beiden den Kniehebel 15 bildenden Stangen 17, 18 scherenartig auseinander gedrückt sind, sind die Bewegungen der Stangen 17, 18 über einen Angriffspunkt 19 jeweils mit einem Führungsschlitten 21 trieblich gekoppelt. Der Führungsschlitten 21 ist in seinem Querschnitt L-förmig ausgestaltet. Das erste freie Ende 22 des Führungsschlittens 21 ist dabei der jeweiligen Stange 17 oder 18 des Kniehebels 15 zugeordnet; die Stange 17 oder 18 ist gelenkig mit dem Führungsschlitten 21 verbunden. Das zweite freie Ende 23 des Führungsschlittens 21 mit den jeweiligen Greifarmen 4 oder 5 steht, gegenüberliegend dem Angriffspunkt 16 des Kniehebels 15 an dem Führungsschlitten 21, unmittelbar oder über Zwischenglieder 24, 25 oder 27 in kraftschlüssiger Wirkverbindung.

Das Zwischenglied 13 ist demnach von dem Kolben 7, der Kolbenstange 8, dem Kniehebel 15 und dem Führungsschlitten 21 in diesem konkreten Ausführungsbeispiel gebildet.

Der Führungsschlitten 21 weist insgesamt vier Durchgangsöffnungen auf, die in ihrem Querschnitt rund ausgestaltet sind. In die jeweilige Durchgangsöffnung ist eine Stange 20 eingesetzt, durch die das Führungsgestänge 14 gebildet ist. Folglich ist jeder der beiden Führungsschlitten 21, vorzugsweise in den Eckbereichen, an der vier Stangen 20 des Führungsgestänges 14 axial verschiebbar abgestützt. Durch die Aufspreizbewegung des Kniehebels 15 wird somit jeder der beiden Führungsschlitten 21 nach außen gedrückt.

Um nunmehr eine Zustellbewegung der beiden Greifarme 4 und 5 zur Aufnahme des Gegenstandes 2 zu erreichen, ist der L-förmig ausgestaltete Führungsschlitten 21 mit dem Angriffspunkt 19 kraftschlüssig mit einem der Greifarme 4 und 5 verbunden. Der Angriffspunkt 19 liegt folglich auf der gegenüberliegenden Seite des jeweiligen Angriffspunktes 16. Somit wird durch die Aufspreizung des Kniehebels 15 und die dadurch erfolgte Linearverschiebung des Führungsschlittens 21 nach außen eine Zustellung der Greifarme 4 und 5 aufeinander zu bewerkstelligt.

Der Kniehebel 15 dient nicht nur als Zwischenglied 13 zur Kraftübertragung, die von der Antriebseinrichtung 6 zur Verfügung gestellt ist, sondern auch dazu, die konstante Antriebskraft der Antriebseinrichtung 6 und des Kolbens 7 zu übersetzen. Das Übersetzungsverhältnis des Kniehebels 15 hängt im Wesentlichen von dessen geometrischer Ausgestaltungen ab. Die Angriffspunkte 16 und 19 zwischen der Kolbenstange 8 und dem jeweiligen Führungsschlitten 21 sind daher variabel einstellbar, so dass das Kraftübersetzungsverhältnis des Kniehebels 15 an die Gegebenheiten der aufzunehmenden Gegenstände 2 ohne weitere Austausch- oder Umrüstungsmaßnahmen anpassbar sind.

In Figur 1b ist gezeigt, dass die Greifarme 4 und 5 den Gegenstand 2 einspannen und diesen von dem Boden 40 abheben. Somit kann der Gegenstand 2, beispielsweise entlang einer Schienenführung oder dgl., transportiert werden. Der Kniehebel 15 ist vollständig auseinander gespreizt.

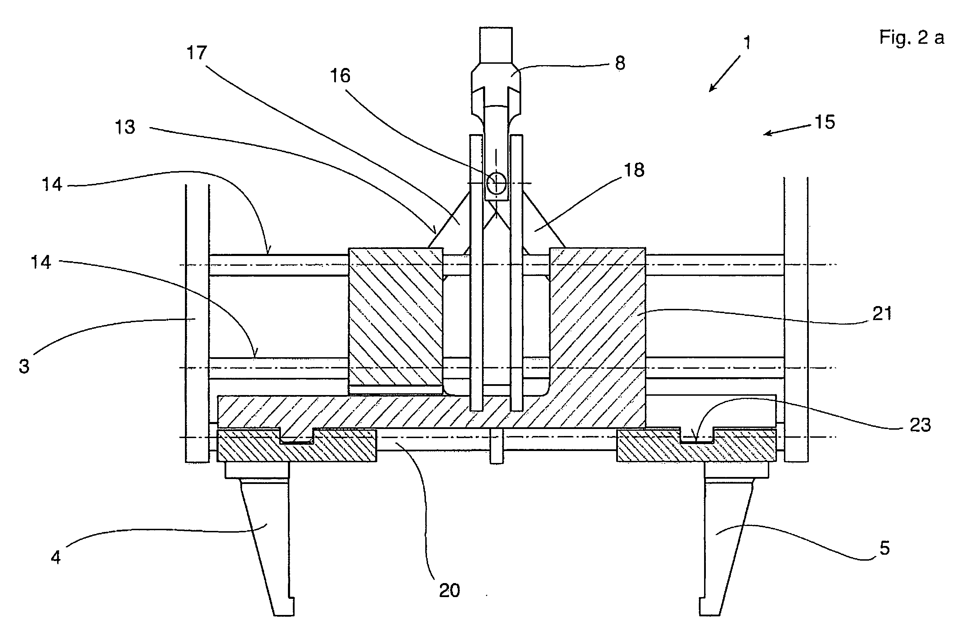

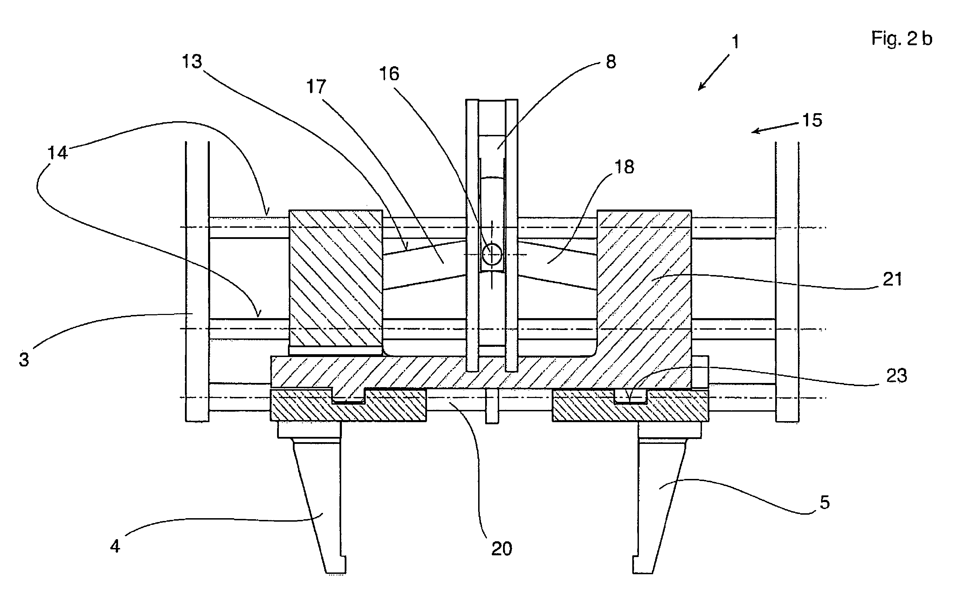

Insbesondere den Figuren 2a und 2b kann die kraftschlüssige Wirkverbindung zwischen dem Führungsschlitten 21 und dem jeweiligen Greifarm 4 oder 5 entnommen sein. In den Greifarm 4 oder 5 ist nämlich eine Nut eingearbeitet, in die ein keilförmiger Ansatz, der an dem Führungsschlitten 21 angeformt ist, eingesetzt ist. Auch die L-förmige Querschnittsform des Führungsschlittens 21 sind den beiden Figuren 2a und 2b zu entnehmen.

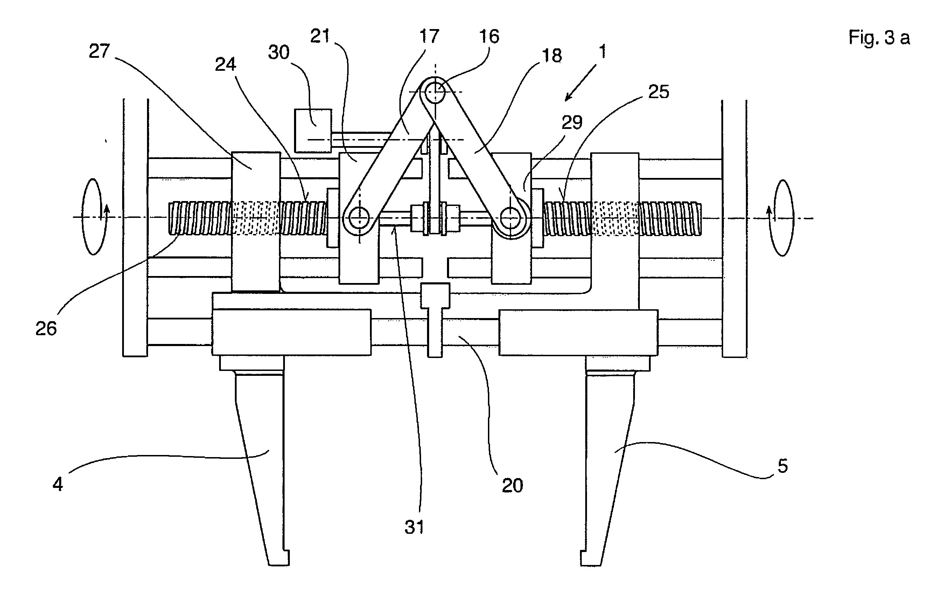

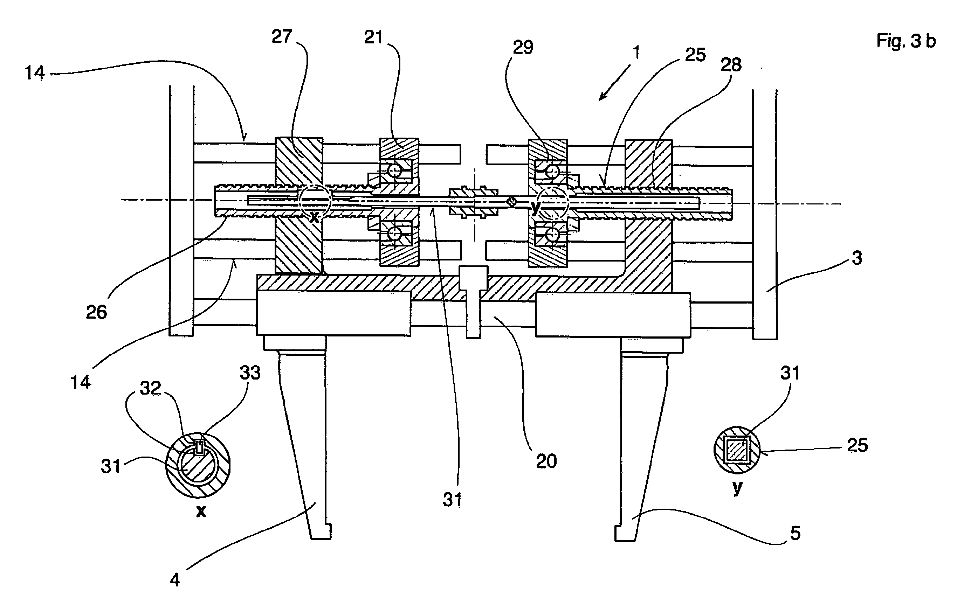

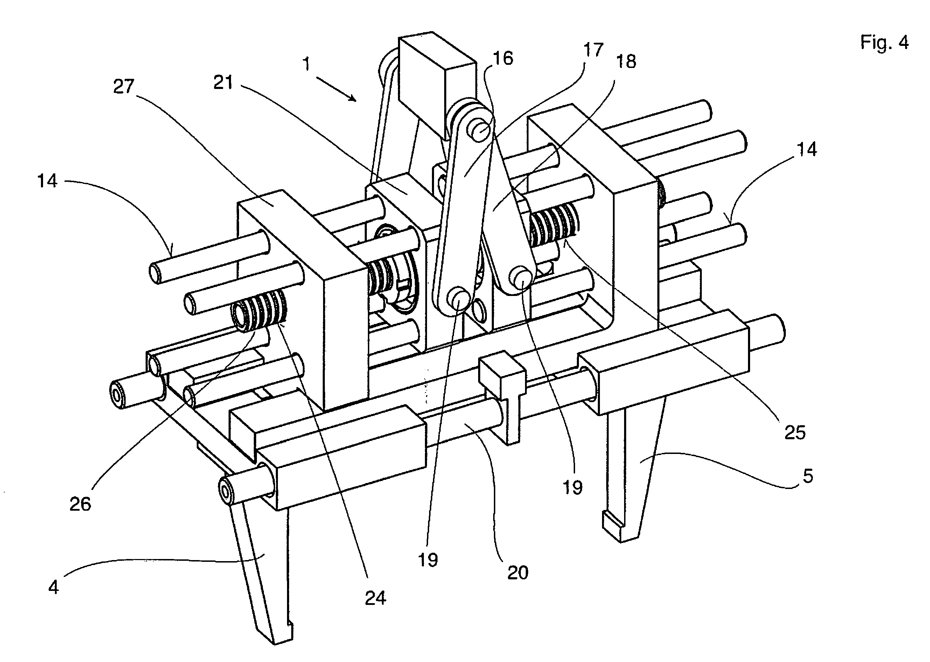

In den Figuren 3a, 3b und 4 ist eine Vorrichtung 1' zum Anheben und Greifen von Gegenständen 2 abgebildet, die zusätzlich zu den in den Figuren 1a bis 2b beschriebenen Bauteilen zwei Gewindespindeln 24 und 25 aufweist. Die Außenkontur der Gewindespindel 24 ist als rechtgängiges und die Außenkontur der Gewindespindel 25 als linksgängiges Gewinde ausgestaltet; somit sind die Rotationsrichtungen der Gewinde der beiden Gewindespindeln 24 und 25 zueinander gegenläufig. Die Gewindespindeln 24, 25 sind zudem zwischen den Stangen 20 des Führungsgestänges 14 gehalten und voneinander beabstandet.

Die Gewindespindeln 24, 25 sind als Hohlkörper ausgestaltet, die fluchtend zueinander angeordnet sind, so dass in das Innere der jeweiligen Gewindespindel 24, 25 eine Antriebswelle 31 einsetzbar ist. Die Antriebswelle 31 wird beispielsweise mittels eines Keilriemenantriebes durch einen Motor 29 in Rotation versetzt. Die Krafteinleitung erfolgt im Wesentlichen fluchtend zu der Linearbewegung der Kolbenstange 8, so dass für die Einleitung der Kräfte der vorhandene Bauraum genutzt ist.

Die beiden Führungsschlitten 21 umschließen die Gewindespindel 24 bzw. 25 und sind mit dieser über ein als Rollenlager ausgebildetes Wälzlager 29 verbunden, so dass zwischen dem drehfest angeordneten Führungsschlitten 21 und der rotierenden Gewindespindel 24 bzw. 25 eine Relativbewegung stattfinden kann. Gleichwohl dienen die Wälzlager 29 auch als Kraftübertragungselemente, denn die von dem Kniehebel 15 aufgewendete Spreizkraft wird über die Wälzlager 29 von dem Führungsschlitten 21 auf die jeweilige Gewindespindel 24 oder 25 übertragen.

Darüber hinaus ist die Gewindespindel 24 bzw. 25 mit der Antriebswelle 31 drehfest und axial verschiebbar verbunden. Beim Aufspreizen, also beim axialen Verschieben des Führungsschlittens 21, kann demnach die Gewindespindel 24 bzw. 25 axial entlang der Antriebswelle 31 verschoben sein; die von der Antriebswelle 31 übertragenen Rotationskräfte werden beispielsweise mittels eines Vierkantprofils oder mittels einer Keil-Nutenverbindung übertragen. Die Antriebswelle 31 ist somit kraftschlüssig mit der jeweiligen Gewindespindel 24 bzw. 25 verbunden.

Wird die Antriebswelle 31 in Rotation versetzt, so werden die beiden Greifarme 4 und 5 in Abhängigkeit von der Drehrichtung nach außen oder nach innen bewegt, so dass der Abstand zwischen den beiden Greifarmen 4 und 5 variabel durch die Antriebswelle 31 und die Gewindespindeln 24 und 25 einstellbar ist. Die Position des Führungsschlittens 21 ändert sich dabei nicht.

Ist der Abstand der beiden Greifarme 4 und 5 an die geometrischen Verhältnisse des aufzunehmenden Gegenstandes 2 angepasst, ist der Kniehebel 15 mittels der Antriebseinrichtung 6 aufzuspreizen, so dass durch die Führungsschlitten 21 eine von den Greifarmen 4 und 5 übertragene Spannkraft erzeugt ist. Während des Einspannvorganges bewegt sich demnach der Führungsschlitten 21 und die Gewindespindel 24 bzw. 25 axial nach außen.

## Patentansprüche

1. Vorrichtung (1) zum Greifen und Anheben von Gegenständen (2), bestehend aus mindestens zwei an einem Traggestell (3) abgestützten Greifarmen (4, 5), zwischen denen der aufzunehmende Gegenstand (2) einspannbar ist, und aus einer mit dem jeweiligen Greifarm (4, 5) über Zwischenglieder (13) trieblich verbundenen Antriebseinrichtung (6),
**dadurch gekennzeichnet,**
**dass** das jeweilige Zwischenglied (13) als L-förmiger Führungsschlitten (21) ausgestaltet ist, dass das erste freie Ende (22) des jeweiligen Führungsschlittens (21) mittels eines Kniehebels (15) trieblich mit der Antriebseinrichtung (6) verbunden ist, dass das zweite freie Ende (23) des jeweiligen Führungsschlittens (21) mit dem jeweiligen Greifarm (4 oder 5), gegenüberliegend dem Angriffspunkt (16) des Kniehebels (15) an dem Führungsschlitten (21), unmittelbar oder über Zwischenglieder (24, 25 und 27) in kraftschlüssiger Wirkverbindung steht und dass der Führungsschlitten (21) und der jeweilige Greifarm (4, 5) an einem Führungsgestänge (14) linear verschiebbar gehalten sind.

2. Vorrichtung nach Anspruch 1,
**dadurch gekennzeichnet,**
**dass** das Führungsgestänge (14) an dem Traggestell (13) gehalten ist und aus einer Stange (20) oder mehreren parallel zueinander verlaufenden Stangen (20) gebildet ist, die in ihrem Querschnitt rund oder mehreckig ausgestaltet und die horizontal ausgerichtet sind.

3. Vorrichtung nach Anspruch 1,
**dadurch gekennzeichnet,**
**dass** durch die Antriebseinrichtung (6) ein Pneumatik- oder Hydraulikkolben (7) angetrieben ist, durch die zusammen mit dem Kniehebel (15) eine voreinstellbare Kraftübersetzung der eingeleiteten Kraft der Antriebseinrichtung (6) auf den jeweiligen Führungsschlitten (21) erreicht ist.

4. Vorrichtung nach Anspruch 1,
**dadurch gekennzeichnet,**
**dass** zur Weiteneinstellung der Greifarme (4, 5) dem jeweiligen Führungsschlitten (21) eine Gewindespindel (24, 25) zugeordnet ist, die zueinander gegenläufige Gewinderichtungen aufweisen, dass der Führungsschlitten (21) mit der Gewindespindel (24, 25) kraftschlüssig verbunden ist und dass an dem Außengewinde (26) der Gewindespindel ein Backen (27) aufgeschraubt ist, der mit dem jeweiligen Greifarm (4, 5) verbunden ist und der drehfest und axial verschiebbar an dem Führungsgestänge (14) gehalten ist.

5. Vorrichtung nach Anspruch 4
**dadurch gekennzeichnet,**
**dass** der Backen (27) und die Gewindespindeln (24, 25) über ein miteinander korrespondierendes Innen- und Außengewinde (28, 26) trieblich miteinander verbunden sind.

6. Vorrichtung nach Anspruch 4,
**dadurch gekennzeichnet,**
**dass** zwischen der jeweiligen Gewindespindel (24, 25) und dem Führungsschlitten (21) ein Wälzlager (29), vorzugsweise ein Rollenlager, vorgesehen ist, durch das die von dem Kniehebel (15) erzeugten Spannkräfte auf die Gewindespindel (24, 25) übertragen sind.

7. Vorrichtung nach Anspruch 4,
**dadurch gekennzeichnet,**
**dass** die Gewindespindel (24, 25) als Hohlkörper ausgebildet ist und dass in jeder der Gewindespindeln (24, 25) eine Antriebswelle (31) eingesetzt ist, die kraftschlüssig mit der Gewindespindel (24, 25) verbunden ist.

8. Vorrichtung nach Anspruch 7,
**dadurch gekennzeichnet,**
**dass** die Innenkontur der Gewindespindel (24, 25) mehreckig ausgestaltet ist und dass die Außenkontur der Antriebswelle (31) an die Innenkontur der Gewindespindel (24, 25) zur Übertragung von Rotationskräften angepasst ist.

9. Vorrichtung nach Anspruch 7,
**dadurch gekennzeichnet,**
**dass** die Innenkontur der Gewindespindel (24, 25) rund ausgestaltet ist, dass die Außenkontur der Antriebswelle (31) an die Innenkontur der Gewindespindel (24, 25) angepasst ist und dass zur Übertragung von Rotationskräften zwischen der jeweiligen Gewindespindel (24 bzw. 25) und der Antriebswelle (31) eine Nut (32) eingearbeitet ist, in die ein Keil (33) eingesetzt ist.

10. Vorrichtung nach Anspruch 8 oder 9,
**dadurch gekennzeichnet,**
**dass** die Gewindespindel (24, 25) und der Führungsschlitten (21) entlang der Antriebswelle (31) axial verschiebbar sind.

11. Vorrichtung nach Anspruch 7,
**dadurch gekennzeichnet,**
**dass** die Antriebswelle (31) von einem Motor (30) in Rotation versetzt ist und dass die Krafteinleitung des Motors (30) zwischen den beiden Führungsschlitten (21) und den Gewindespindeln (24, 25) angeordnet ist.

12. Vorrichtung nach einem der vorgenannten Ansprüche,
**dadurch gekennzeichnet,**
**dass** die Angriffspunkte (16, 19) der Antriebseinrichtung (6) und der Greifarme (4, 5) an dem Führungsschlitten (21) variabel verschiebbar sind.

13. Vorrichtung nach einem der vorgenannten Ansprüche,
**dadurch gekennzeichnet,**
**dass** in dem Traggestell (3) eine Gewindebohrung (36) eingearbeitet ist, dass in die Gewindebohrung (36) ein einen Anschlag (34) bildender Gewindestift (35) eindrehbar ist und dass mittels der Position des Gewindestiftes (35) der Hubweg (HW) des Angriffspunktes (16) des Kniehebels (15) begrenzbar ist.

14. Vorrichtung nach einem der vorgenannten Ansprüche,
**dadurch gekennzeichnet,**
**dass** die Greifarme (4, 5) kraft- oder formschlüssig mit dem aufzunehmenden Gegenstand (2) im eingespanntem Zustand verbunden sind.

## Claims

1. A device (1) for gripping and lifting objects (2), comprising at least two gripper arms (4, 5) supported on a carrier frame (3), between which the object (2) to be picked up can be clamped, and also comprising a driving device (6) in a driving connection with the corresponding gripper arm (4, 5) by means of intermediate elements (13),
**characterised in that**,
the corresponding intermediate element (13) is configured as an L-shaped guide slide (21), that the first free end (22) of the corresponding guide slide (21) is in a driving connection with the driving device (6) by means of a toggle lever (15), that the second free end (23) of the corresponding guide slide (21) is in a positive, active connection either directly or via intermediate elements (24, 25 and 27) with the corresponding gripper arm (4 or 5) opposite to the point of action (16) of the toggle lever (15) on the guide slide (21), and that the guide slide (21) and the corresponding gripper arm (4, 5) are held on a guide linkage (14) in an arrangement that is moveable in a linear direction.

2. The device in accordance with Claim 1,
**characterised in that,**
the guide linkage (14) is held on the support frame (13) and comprises a rod (20) or several rods (20) running parallel to one another, which have a round or polygonal cross section and are horizontally aligned.

3. The device in accordance with Claim 1,
**characterised in that,**
the driving device (6) drives a pneumatic or hydraulic piston (7), by means of which, together with the toggle lever (15), a pre-adjustable force transmission of the force applied by the driving device (6) on the corresponding guide slide (21) is achieved.

4. The device in accordance with Claim 1,
**characterised in that,**
for width adjustment of the gripper arms (4, 5), the corresponding guide slide (21) has a threaded spindle (24, 25) allocated to it, which features threads running in opposite directions to one another, that the guide slide (21) is in a positive connection with the threaded spindle (24, 25) and that a jaw (27) is screwed onto the external thread (26) of the threaded spindle in which case the jaw (27) is connected to the corresponding gripper arm (4, 5) and is held in a rotationally fixed and axially moveable arrangement on the guide linkage (14).

5. The device in accordance with Claim 4,
**characterised in that,**
the jaw (27) and the threaded spindles (24, 25) are connected to one another in a drivable arrangement by means of corresponding internal and external threads (28, 26).

6. The device in accordance with Claim 4,
**characterised in that,**
an anti-friction bearing (29), preferably a roller bearing, is provided between the corresponding threaded spindle (24, 25) and the guide slide (21), by means of which the clamping forces generated by the toggle lever (15) are transferred to the threaded spindle (24, 25).

7. The device in accordance with Claim 4,
**characterised in that,**
the threaded spindle (24, 25) is configured as a hollow body and that each of the threaded spindles (24, 25) has a drive shaft (31) inserted in it, which is in a positive connection with the threaded spindle (24, 25).

8. The device in accordance with Claim 7,
**characterised in that,**
the inside contour of the threaded spindle (24, 25) has a polygonal configuration and that the outer contour of the drive shaft (31) is adapted to the inner contour of the threaded spindle (24, 25) in order for rotational forces to be transmitted.

9. The device in accordance with Claim 7,
**characterised in that,**
the inside contour of the threaded spindle (24, 25) has a round configuration, that the outer contour of the drive shaft (31) is adapted to the inner contour of the threaded spindle (24, 25) and that, in order to transfer rotational forces between the corresponding threaded spindle (24 or 25) and the drive shaft (31), a groove (32) is incorporated into which a wedge (33) is inserted.

10. The device in accordance with Claim 8 or 9,
**characterised in that,**
the threaded spindle (24, 25) and the guide slide (21) can be axially adjusted along the drive shaft (31).

11. The device in accordance with Claim 7,
**characterised in that,**
the drive shaft (31) is set in rotation by a motor (30) and that the force application of the motor (30) is arranged between the two guide slides (21) and the threaded spindles (24, 25).

12. The device in accordance with one of the aforementioned claims,
**characterised in that,**
the points of action (16, 19) of the driving device (6) and the gripper arms (4, 5) can be adjusted variably on the guide slide (21).

13. The device in accordance with one of the aforementioned claims,
**characterised in that,**
a threaded hole (36) is worked into the support frame (3), that a threaded pin (35) can be screwed into the threaded hole (36) and forms a stop (34) and that the stroke distance (HW) of the point of action (16) of the toggle lever (15) can be limited by means of the position of the threaded pin (35).

14. The device in accordance with one of the aforementioned claims,
**characterised in that,**
the gripper arms (4, 5) are non-positively or positively connected to the object (2) to be picked up in the clamped condition.

## Revendications

1. Dispositif (1) de saisie et de levage d'objets (2), comprenant au moins deux bras de saisie (4, 5) s'appuyant sur un support (3) et entre lesquels il se laisse serrer l'objet à saisir (2), et un équipement d'entraînement (6) lié de manière entraînant, par l'intermédiaire d'éléments intermédiaires (13), avec le bras de saisie respectif (4, 5),
**caractérisé en ce que**
l'élément intermédiaire respectif (13) est conçu sous la forme d'un chariot de guidage (21) en L, que la première extrémité libre (22) du chariot de guidage respectif (21) est lié par entraînement, moyennant un levier coudé (15), avec l'équipement d'entraînement (6), qu'avec le bras da saisie respectif (4 ou 5) la deuxième extrémité libre (23) du chariot de guidage respectif (21) est lié par engagement positif, soit directement soit par l'intermédiaire d'éléments intermédiaires (24, 25 et 27), avec le chariot de guidage (21), vis-à-vis du point d'attaque (16) du levier coudé (15), et que le chariot de guidage (21) et le bras da saisie respectif (4 ou 5) se laissent déplacer linéairement sur une tringlerie de guidage (14).

2. Dispositif d'après la revendication 1,
**caractérisé en ce que**
la tringlerie de guidage (14) est retenue sur le support (13) et formée par une tige (20) ou par plusieurs tiges parallèles (20) à section transversale ronde ou polygonale orientées en direction horizontale.

3. Dispositif d'après la revendication 1,
**caractérisé en ce que**
l'équipement d'entraînement (6) actionne un piston pneumatique ou hydraulique (7) permettant, en collaboration avec le levier coudé (15), de réaliser une transmission de force réglable de la force dirigée de l'équipement d'entraînement (6) vers le chariot de guidage respectif (21).

4. Dispositif d'après la revendication 1,
**caractérisé en ce que**
pour le réglage de l'écartement des bras de saisie (4, 5), il est attribué au chariot de guidage respectif (21) une broche filetée (24, 25) avec des sens de spires opposés l'une par rapport à l'autre, que le chariot de guidage (21) est lié par connexion à friction avec la broche filetée (24, 25) et que, sur le filet extérieur (26) de la broche filetée, il est vissé un mors (27) lié avec le bras de saisie respectif (4, 5) et retenu de manière résistant à la torsion et axialement déplaçable sur la tringlerie de guidage (14).

5. Dispositif d'après la revendication 4,
**caractérisé en ce que**
moyennant un taraudage et un filet extérieur collaborant ensemble (28, 26), le mors (27) et les broches filetées (24, 25) sont liés par entraînement entr'eux.

6. Dispositif d'après la revendication 4,
**caractérisé en ce que**,
entre la broche filetée respective (24, 25) et le chariot de guidage (21), il est prévu un roulement (29), de préférence un roulement à rouleaux, qui permet de transmettre les forces de serrage produites par le levier coudé (15) sur la broche filetée (24, 25).

7. Dispositif d'après la revendication 4,
**caractérisé en ce que**
la broche filetée (24, 25) est conçu sous la forme d'un corps creux et que, dans chacune des broches filetées (24, 25), il est monté un arbre d'entraînement (31) lié par connexion à friction avec la broche filetée (24, 25).

8. Dispositif d'après la revendication 7,
**caractérisé en ce que**
le contour intérieur de la broche filetée (24, 25) est polygonal et que le contour extérieur de l'arbre d'entraînement (31) est adapté au contour intérieur de la broche filetée (24, 25) afin de transmettre les forces de rotation.

9. Dispositif d'après la revendication 7,
**caractérisé en ce que**
le contour intérieur de la broche filetée (24, 25) est rond, que le contour extérieur de l'arbre d'entraînement (31) est adapté au contour intérieur de la broche filetée (24, 25) et que pour la transmission des forces de rotation, il est prévu entre la broche filetée respective (24 ou 25) et l'arbre d'entraînement (31) une gorge (32) dans laquelle il est inséré un coin (33).

10. Dispositif d'après une des revendications 8 ou 9,
**caractérisé en ce que**
la broche filetée (24, 25) et le chariot de guidage (21) se laissent déplacer axialement long de l'arbre d'entraînement (31).

11. Dispositif d'après la revendication 7,
**caractérisé en ce que**
l'arbre d'entraînement (31) est mis en rotation par un moteur (30) et que l'introduction de force du moteur (30) est prévue entre les deux chariots de guidage (21) et les broches filetées (24, 25).

12. Dispositif d'après une des revendications précédentes,
**caractérisé en ce que**
les points d'attaque (16, 19) de l'équipement d'entraînement (6) et des bras de saisie (4, 5) se laissent déplacer de manière variable sur le chariot de guidage (21).

13. Dispositif d'après une des revendications précédentes,
**caractérisé en ce que**
dans le support (3), il est pratiqué un taraudage (36), que dans le taraudage (36), il peut être vissé un goujon fileté (35) formant une butée (34) et que, par l'intermédiaire de la position du goujon fileté (35), il peut être limité la course du point d'attaque (16) du levier coudé (15).

14. Dispositif d'après une des revendications précédentes,
**caractérisé en ce que**,
en état serré, les bras de saisie (4, 5) sont liés par connexion à friction ou par engagement positif avec l'objet à saisir (2).
